(19) Europäisches Patentamt
European Patent Office
Office européen des brevets

(11) **EP 4 181 580 A1**

(12) **EUROPEAN PATENT APPLICATION**

(43) Date of publication:
**17.05.2023 Bulletin 2023/20**

(21) Application number: **21207526.1**

(22) Date of filing: **10.11.2021**

(51) International Patent Classification (IPC):
***H04W 52/02*** *(2009.01)*

(52) Cooperative Patent Classification (CPC):
**H04W 52/028; H04W 52/0216; H04W 52/0235**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Intel Corporation
Santa Clara, CA 95054 (US)**

(72) Inventors:
• **HEGDE, Mythili
560078 Bangalore, Karnataka (IN)**
• **DAS, Sajal Kumar
560115 Bangalore (IN)**

(74) Representative: **2SPL Patentanwälte PartG mbB
Landaubogen 3
81373 München (DE)**

(54) **METHOD AND APPARATUS FOR OFFLOADING IDLE MODE ACTIVITIES FROM ONE USER EQUIPMENT TO ANOTHER**

(57) A method and apparatus for offloading idle mode activities from one user equipment (UE) to another. A UE includes a cellular modem, a device-to-device (D2) communication modem, and a processor. The cellular modem performs idle mode activities during an idle mode. The processor controls the cellular modem and the D2D modem. The processor is configured to send information necessary for performing the idle mode activities to the secondary UE for offloading the idle mode activities of the primary UE to the secondary UE and put the cellular modem in a low power state or turn off the cellular modem during the idle mode. The processor wakes up the cellular modem to receive a paging message if a wake-up signal is received from the secondary UE.

Send, by a primary user equipment (UE), information necessary for performing idle mode activities to a secondary UE for offloading the idle mode activities of the primary UE to the secondary UE. — 502

Put a cellular modem circuitry in the primary UE in a low power state or turn off the cellular modem circuitry in the primary UE during the idle mode. — 504

Wake up the cellular modem circuitry to receive a paging message if a wake-up signal is received from the secondary UE via a device-to-device modem circuitry. — 506

FIG. 5

EP 4 181 580 A1

## Description

### Field

Examples relate to a method for offloading idle mode activities from one user equipment (UE) to another and a UE configured to implement the same.

### Background

Driven by always-connected user experiences, user devices such as laptops, chrome books, tablets, and the like are increasingly integrating a cellular modem (e.g., a wireless modem for Third Generation (3G), Fourth Generation (4G), Fifth Generation (5G), or the like) inside the user devices. Advantage of having a cellular modem inside the user devices is that internet connection remains available to a user anywhere due to vast presence of cellular wireless communication networks. In addition to the cellular modem for connection with the cellular network, the user devices also include a Bluetooth modem (or other device-to-device communication modem) for direct connection with close-by devices. Due to its very low level of power consumption, Bluetooth Low Energy (BT LE) modules are widely used in the user devices. The average power consumption of BT LE modems is 0.01 W, which is 100 times lower than a Bluetooth 5.0 modem. In comparison to a BT LE modem, the transmit and reception power of a cellular modem is much higher.

There are several key performance indicators (KPIs)/key experience indicators (KEIs) associated with a UE. One of the prime KPIs/KEIs is device power consumption and sustaining a battery life. For example, most of laptop vendors publish the standby and active battery hours to indicate their respective power performance.

If a cellular modem is integrated in a UE (e.g., a laptop, a tablet, etc.), to support the always-connected user experiences, the cellular modem enters an idle mode when there is no data to transmit and reads a control message (e.g., a physical downlink control channel (PDCCH) message) periodically to determine whether there is an incoming paging message for the UE. As the cellular technology complexity increases with an increased bill of material (BOM), the power consumption of the cellular connectivity device also increases. A 3G modem in an idle or airplane mode consumes around 6 mW while a 5G modem consumes around 22 mW in an idle mode, which is almost 4 times. User expects high end modem features without compromising on the battery life. Therefore, there is a need to achieve a longer battery life for user devices with the integrated cellular modem.

### Description of the Figures

Some examples of apparatuses and/or methods will be described in the following by way of example only, and with reference to the accompanying figures, in which

FIG. 1 shows an example of two UEs;
FIG. 2 shows a system including two UEs and a base station of a wireless wide area network (WWAN) and wireless connections among them;
FIG. 3 is a block diagram of a system including two UEs;
FIG. 4 is a diagram showing an example message sequence for interaction between a primary UE and a secondary UE for offloading the idle mode activities from the primary UE to the secondary UE;
FIG. 5 is a flow diagram of an example process implemented in a primary UE for offloading idle mode activities from a primary UE to a secondary UE;
FIG. 6 is a flow diagram of an example process implemented in a secondary UE for offloading idle mode activities from a primary UE to a secondary UE;
FIG. 7 illustrates a user device in which the examples disclosed herein may be implemented; and
FIG. 8 illustrates a base station or infrastructure equipment radio head in which the examples disclosed herein may be implemented.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

A user may have or carry two or more UEs (user devices). Hereafter, the terms "UE" and "user device" (or simply "device") will be used interchangeably. For example, the UE may be a laptop computer, a chrome book, a tablet computer, a mobile phone, a smart phone, any wearable computing device, or the like. The user may have more than two UEs. These (two or more) UEs may be located close to each other as the user keeps accesses to all devices. Each of the UEs may have a cellular modem inside through which each device connects with a cellular base station (e.g., the 3G, 4G, or 5G base station, or the like). Each of the UEs may also have a device-to-device (D2D) communication modem (e.g., a wireless local area network (WLAN) modem, a BT modem, etc.) inside through which each device communicates with other nearby devices directly. The cellular modem may also have a capability of direct D2D communication with other UE.

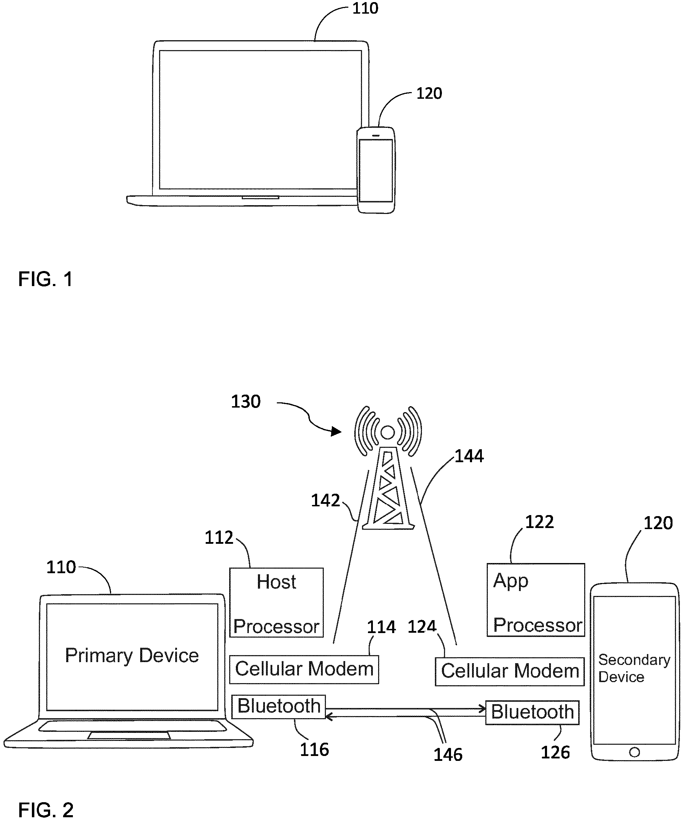

FIG. 1 shows an example of two UEs. FIG. 1 depicts, as an example, a collection of a laptop computer 110 and a mobile phone 120. However, the UEs may be any types of user devices. For example, the two user devices may be a pair of a laptop and a tablet, a tablet and a mobile phone, two mobile phones, two tablets, two laptops, etc. In addition, the number of collected UEs is not limited to two, but may be three, four, or any number. For examples, three UEs such as a laptop, a tablet, and a mobile phone may be collated.

FIG. 2 shows a system including two UEs and a base station of a wireless wide area network (WWAN) and wireless connections among them. FIG. 2 depicts, as an example, a laptop computer 110 as a primary device and a mobile phone 120 as a secondary device. As explained above, the UEs may be any type of user devices and any number of UEs may be collated.

The laptop computer 110 includes a processor 112, a cellular modem 114, and a BT modem 116. The processor 112 (a host processor) controls the cellular modem 114 and the BT modem 116. An operating system and other applications, programs, or processes run on the processor 112.

The mobile phone 120 includes a processor 122, a cellular modem 124, and a BT modem 126. The processor 122 (application processor) controls the cellular modem 124 and the BT modem 126. An operating system and other applications, programs, or processes run on the processor 122.

The cellular modems 114, 124 are a device for cellular connectivity (e.g., 3G, 4G, 5G, etc.). The BT modems 116, 126 are a device for direct wireless connectivity with another BT-enabled device. Alternatively, instead of or in addition to the BT modems 116, 126, IEEE 802.11-based WiFi modems or the like may be included in the laptop computer 110 and the mobile phone 120, and the WiFi modems may be used for the direct device-to-device communication. The cellular modem 114, 124 and the BT modem 116, 126 may be available in any form factor and may be integrated into a single module.

The base station 130 is a network entity for providing a connection to a core network. For example, the base station 130 may be a 2G, 3G, 4G, or 5G base station or the like. The base station 130 may be a NodeB, an evolved NodeB, a gNodeB (gNB), a radio access network (RAN) node, a transmission reception point (TRP), a relay node, or the like. Each cellular modem 114, 124 may establish a wireless connection (link) with the base station 130, respectively. The wireless connection 142 between the cellular modem 114 and the base station 130 and the wireless connection 144 between the cellular modem 124 and the base station 130 are separate and independent. The wireless connections 142, 144 are set up separately and independently and maintained separately and independently. Similar idle mode activities may be performed by the cellular modems 114, 124, respectively, during the idle mode. The BT modem 116 of the laptop computer 110 and the BT modem 126 of the mobile phone 120 may establish a direct connection (link) 146 to each other.

Hereafter, examples are disclosed for providing a mechanism to offload the idle mode workload (idle mode activities/procedures) from one UE or a group of UEs to another UE by identifying a local common connectivity link between the (two or more) UEs. This local common connectivity link is used to unify the available resources in the system and used to unify the workload execution into a single device. Examples will be explained with reference to Third Generation Partnership Project (3GPP) 4G or 5G. However, it should be noted that the examples are applicable to any wireless systems including, but not limited to 2G, 3G, or the like.

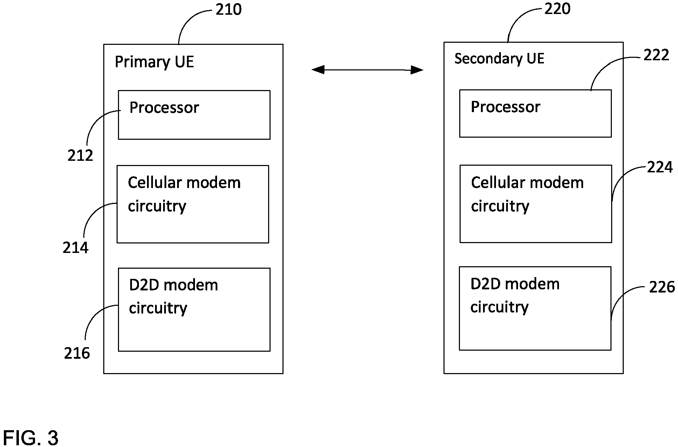

FIG. 3 is a block diagram of a system including two UEs. One of the UEs is referred to as a primary UE 210 and the other is referred to as a secondary UE 220. The primary UE 210 is a UE that offloads the idle mode activities to the secondary UE 220, and the secondary UE 220 is a UE that performs the idle mode activities on behalf of the primary UE 210. FIG. 3 depicts only two UEs as an example, but the system may include more than two UEs. For example, the system may include one secondary UE and two or more primary UEs and the secondary UE may perform the idle mode activities for more than one primary UE.

The primary UE 210 includes a processor 212, a cellular modem circuitry 214, and a D2D modem circuitry 216. The cellular modem circuitry 214 is for wireless communication with a base station of a cellular WWAN. The cellular WWAN may be a 2G, 3G, 4G, or 5G network, or the like. Hereafter, the terms "WWAN" and "cellular network" will be used interchangeably. The cellular modem circuitry 214 is configured to perform idle mode activities during an idle mode. the D2D modem circuitry 216 is for direct wireless communication with another UE, e.g., a secondary UE 220. The processor 212 is configured to control the cellular modem circuitry 214 and the D2D modem circuitry 216.

During the idle mode, the cellular modem circuitry 214 performs certain idle mode activities. The processor 212 may be configured to send information necessary for performing the idle mode activities to the secondary UE 220 for offloading the idle mode activities to the secondary UE 220. The processor 212 is configured to put the cellular modem circuitry 214 in a low power state or turn off the cellular modem circuitry 214 during the idle mode. The processor 212 itself may also enter an inactive state or a low power state if there is no activity.

During the idle mode, the secondary UE 220 performs the idle mode activities on behalf of the primary UE 210 based on the information received from the primary UE 210 and send a wake-up signal once a paging indication is detected for the primary UE 210. The processor 212 is configured to wake up the cellular modem circuitry 214 to receive a paging message or to perform other tasks if a wake-up signal is received from the secondary UE 220.

The information sent by the primary UE 210 to the secondary UE 220 includes the discontinuous reception (DRX) cycle of the primary UE 210 during the idle mode and a paging radio network temporary identifier (P-RNTI) of the primary UE 210. The information may further include a cell identity (ID) of a cell that the primary UE 210 camps on, a frequency that the primary UE 210 monitors during the idle mode, and/or the radio access technology (RAT) of the primary UE 210. The wake-up signal may include a reason for the wake-up (e.g., a paging indication on the WWAN for the primary UE 210).

The secondary UE 220 performs the idle mode activities during the idle mode. The secondary UE 220 performs measurements on cells and selects/reselects a cell based on the measurements. The secondary UE 220 may send the cell selection/reselection-related information (e.g., the measurement information or the camped cell ID, or the like) to the primary UE 210 along with the wake-up signal. The processor 212 may be configured to receive cell selection/reselection-related information from the secondary UE 220 along with the wake-up signal and after a wake up from the idle mode, the cellular modem circuitry 214 may be configured to perform cell selection/reselection based on the received cell selection/reselection-related information.

The D2D modem circuitry 216 may be a Bluetooth modem (e.g., a BT LE modem), or a WiFi modem. The Bluetooth modem may remain active during the idle mode and is configured to wake up the processor 212 in response to the wake-up signal.

The secondary UE 220 includes a processor 222, a cellular modem circuitry 224, and a D2D modem circuitry 226. The cellular modem circuitry 224 is for wireless communication with a base station of a cellular WWAN. The cellular modem circuitry 224 is configured to perform idle mode activities during an idle mode. The D2D modem circuitry 226 is for direct wireless communication with another UE, such as the primary UE 210. The processor 222 is configured to control the cellular modem circuitry 224 and the D2D modem circuitry 226.

The processor 222 is configured to receive information necessary for performing idle mode activities from the primary UE 210. The processor 222 is configured to control the cellular modem circuitry 224 to perform the idle mode activities for the primary UE 210 based on the received information and send a wake-up signal to the primary UE 210 using the D2D modem circuitry 226 if a paging indication for the primary UE 210 is detected.

The information received from the primary UE 210 includes a DRX cycle of the primary UE 210 during the idle mode and a P-RNTI of the primary UE 210. The information may further include a cell ID of a cell that the primary UE 210 camps on, a frequency that the primary UE 210 monitors during the idle mode, and/or the RAT of the primary UE 210. The processor 222 may be configured to include a reason for wake-up in the wake-up signal.

The secondary UE 220 performs the idle mode activities during the idle mode. The secondary UE 220 performs measurements on cells and selects/reselects a cell based on the measurements. The processor 222 may be configured to send cell selection/reselection-related information that the secondary UE 220 obtained during the idle mode to the primary UE 210 along with the wake-up signal. The D2D modem circuitry 226 may be a Bluetooth modem (e.g., a BT LE modem) or a WiFi modem.

When there is no data to transmit, the cellular modem 214, 224 enters an idle mode (RRC_IDLE) and reads a control message (e.g., a PDCCH message) periodically to determine whether there is an incoming paging message for the UE, whether there is an update on system information, or the like. The idle mode (RRC _IDLE) is a radio resource control (RRC) state in which a UE is switched on but does not have any established RRC connections. No RRC connection means that the presence of the UE is, in general, not known to the network at the cell level because the base station does not have any context for the UE. The location of the UE in the idle mode (RRC _IDLE) is known to the network at the level of tracking/routing areas, which consist of a group of cells. During the idle mode, a UE gets into and stays in a sleeping mode defined in a DRX cycle. This DRX cycle may be defined in the system information of the network. In the idle state, a UE cellular modem periodically wakes up and monitors a PDCCH to check for the presence of a paging message (a UE looks for any information encrypted by a P-RNTI of the UE). If the PDCCH indicates that a paging message is transmitted in the subframe, then the UE needs to demodulate the corresponding PDSCH transmission (i.e., a paging channel (PCH)) to see if the paging message is directed to the UE.

The UE in the idle mode performs an idle mode procedure (idle mode activities). The idle mode procedure includes monitoring a paging message/indication for an incoming call to the UE, monitoring a system information change, performing cell signal measurements (measurements of the signal strength or quality of the camped cell and neighbor cells), cell search and public land mobile network (PLMN) search (detect a PLMN and determine which cell to camp on), and cell selection and reselection (determine a cell to camp on), etc. If there is no incoming call, the UE enters back into a sleep state and stays inactive most of the time. Such a long inactive time in the idle mode significantly reduces battery consumption in the UE.

In examples disclosed herein, the cellular modem idle mode activities are offloaded from the primary UE(s) to the secondary UE. When a user has or carries two or more UEs (e.g., a primary UE (e.g., a laptop) and a secondary UE (e.g., a mobile phone)), these UEs may remain close to each other as the user keeps the access to the devices. Each of these UEs has a cellular modem inside, respectively, to communicate with the cellular network base station. Conventionally, in the idle mode, both UEs perform the same idle mode activities independently.

The cellular modem in the mobile phone typically remains connected to a serving cell and stays in an idle mode if there is no active data communication. In the idle mode, the mobile phone periodically wakes up and reads the paging channel or paging indication for detecting any incoming paging messages, and measures neighbor cells for cell selection/reselection while staying in the idle mode. The mobile phone (or any UE that performs the idle mode activities) has the latest information for cell selection and reselection (e.g., the frequency, the RAT, the cell ID, etc.) at the specific location. These idle mode activities in any cellular modem consumes significant amount of energy due to the periodic activities.

In examples, the primary UE may transfer the information required for performing the idle mode activities to the secondary UE and enter a deep sleep state (e.g., airplane mode) or turn off the cellular modem and the secondary UE may perform the idle mode activities on behalf of the primary UE. For example, the primary UE may transfer the data required for reading the periodic paging messages in the idle mode and the secondary UE may detect a paging indication or message on behalf of the primary UE. Once the secondary UE detects a paging indication or message for the primary UE, the secondary UE sends a wake-up signal to the primary UE.

Both the primary UE and the secondary UE may have a BT modem (e.g., a BT LE device) or any D2D communication modem (e.g., a WiFi modem) for local short-range direct communication. The primary UE may transfer the data to the secondary UE via the BT modem (i.e., via BT messages) or any D2D communication modem, and the secondary UE may send the wake-up signal to the primary UE via the BT modem (i.e., via BT messages) or any D2D communication modem.

In 4G and 5G, a paging indication and a paging message are sent via a physical downlink control channel (PDCCH) and a physical downlink shared channel (PDSCH), respectively. In 3G, a paging indicator is transmitted via a paging indicator channel (PICH) and a paging message is transmitted via a paging channel (PCH). In an idle mode, a cellular modem periodically wakes up at specific time instances (paging occasions) to monitor for a paging indication and message. The cycle for the periodic wake up (a discontinuous reception (DRX) cycle) may be, for example, 64 ms, 256 ms, etc. In 4G/5G, a paging message is indicated to a UE by a specific paging radio network temporary identifier (P-RNTI) carried within downlink control information (DCI). A paging indication is determined by a P-RNTI in a PDCCH. A P-RNTI may be derived from the international mobile subscriber identifier (IMSI) of the UE.

The UE needs to monitor the PDCCH for the P-RNTI only at the predetermined period (e.g., 64 ms, 256 ms, etc.) known as a paging occasion as set by a DRX cycle. Every paging occasion, a UE receives and checks for paging indication for the UE and if no paging indication is found, then the UE enters a sleep mode until the next paging occasion.

A paging occasion is a subframe within a paging frame where a P-RNTI may be transmitted on a PDCCH addressing the paging message. A paging frame is one radio frame, which may contain one or multiple paging occasions. The paging frame is a frame having a system frame number (SFN) that satisfies the following:

$$\text{SFN mod } T = (T/N) \times (\text{UE\_ID mod } N), \qquad\qquad \text{Equation (1)}$$

where T is a DRX cycle of the UE in radio frames. T is determined by the shortest of the UE-specific DRX value, if allocated by upper layers or a default DRX value broadcast in system information. T can have values of 32, 64, 128 or 256 radio frames, which correspond to time intervals of 320, 640, 1280 and 2560 ms. A UE may propose its own DRX cycle length within the ATTACH REQUEST or TRACKING AREA UPDATE REQUEST messages. N = min(T, nB). nB can be any one of 4T, 2T, T, T/2, T/4, T/8, T/16, T/32, which are broadcast in the system information block. The UE ID value (UE_ID) is derived from the IMSI. For example, UE_ID = IMSI mod 1024. The P-RNTI and the UE_ID may be the same. The paging occasion is then determined based on Ns and i_s, where Ns = max(1, nB/T) and i_s = floor(UE_ID/N) mod Ns. A different group of UEs (e.g., grouped according to their IMSI) monitor different sub-frames for their paging messages.

In examples, before the primary UE goes to sleep and put the cellular modem switched off or in an airplane mode or a low power mode, the primary UE (i.e., the cellular modem) passes the DRX cycle (T value in Equation (1)) and the P-RNTI of the primary UE to the secondary UE for offloading the page monitoring on behalf of the primary UE. The secondary UE determines the paging occasion of the primary UE based on the received information (e.g., the DRX cycle and the P-RNTI of the primary UE) and monitors the paging indication for the primary UE.

When the primary UE and the secondary UE are co-located, the camped cell of the primary UE and the secondary UE would be the same (assuming that the primary and secondary UEs are subscribed with the same mobile network operator). Therefore, both the primary UE and the secondary UE would be synchronized to the same network/base station and timing will not be a problem. When the primary UE (e.g., the laptop computer) is in an idle mode and gone to a deep sleep state or turned off, the secondary UE (e.g., the mobile phone) performs the idle mode activities for the primary UE, e.g., monitors a paging message/indication for the primary UE. When the user is away with the mobile phone from the laptop computer, the laptop computer does not need to come out of the sleep mode and can save battery power. When the user with the mobile phone comes close to the laptop computer again, the mobile phone may trigger wake-up of the laptop computer on BT and during that time the mobile phone may pass the camped cell information and other relevant information to the laptop computer to reduce the time for cell selection/reselection.

There is no need to exchange the IMSI or any other information between the primary and secondary UEs. If the subscriber identification modules (SIMs) of the primary and secondary UEs belong to the same mobile network operator (e.g., if the user buys the SIMs for the primary and secondary UEs from the same mobile network operator), the primary UE may just send the DRX cycle and the P-RNTI of the primary UE to the secondary UE. If the SIMs in the two UEs belong to different mobile network operators, in addition to the P-RNTI and the DRX cycle of the primary UE, the primary UE may also send the frequency carrier information, the serving cell number (ID) of the camped cell, and/or the RAT of the primary UE to the secondary UE.

After knowing the paging occasion (determined from the DRX cycle and the P-RNTI) and the P-RNTI of the primary UE, the secondary UE may start monitoring the P-RNTI for the primary UE along with its own page monitoring. If the SIM belongs to the same mobile network operator and these UEs are located close to each other, the serving cell of both UEs will be the same. This means that the cell frequency, cell number etc. will be the same for both UEs. In that case, it will be easy for the secondary UE to monitor the paging messages for the primary UE in the same wake-up operation.

If the primary and secondary UEs belong to different mobile network operators, then the primary UE and the secondary UE may camp on separate base stations (NB, eNB, gNB, etc). In such case, the secondary UE needs to know the serving cell information (e.g., frequency band, carrier frequency of the primary UE) and the paging occasion and the P-RNTI of the primary UE. These details are passed from the primary UE to the secondary UE for offloading the idle mode activities to the secondary UE. The primary UE may pass the Cell ID, cell frequency, and/or RAT information of the primary UE to the secondary UE in addition to the DRX cycle and the P-RNTI.

The secondary UE detects the synchronization signals (primary synchronization signal (PSS) and secondary synchronization signal (SSS)) of the indicated cell of the primary UE and computes the timing offset between the camped cell of the secondary UE and the cell of the primary UE. This offset may be used whenever the secondary UE goes for reading the PDCCH for the primary UE.

After passing the information necessary for page monitoring and/or performing other idle mode activities to the secondary UE, the primary UE may switch off the cellular modem completely or put it in a low power state (e.g., in an airplane mode) to save power consumption during the idle mode. During that time, the BT modem (e.g., a BT LE receiver) of the primary UE may remain active to support Wake-On-Bluetooth feature (the feature that allows a BT device to wake up the main system). It consumes extremely low energy. While in the idle mode, since the BT modem remains active, the primary UE could receive BT messages from the secondary UE.

If any incoming paging indication for the primary UE is detected by the secondary UE (e.g., if the P-RNTI of the primary UE is detected in a PDCCH in the paging occasion), the secondary UE sends a BT trigger message to the primary UE to wake up the primary UE, optionally along with the wake-up reason (a detection of paging indication). In response to the BT trigger message, the host processor of the primary UE wakes up and recognizes the wake-up reason if included in the BT trigger message and enables the cellular modem for a paging message reception. As a paging message is sent several times repeatedly from the network, the primary UE may wake up and activate the cellular modem and receive the paging message on-time.

This method can be applied to more than two UEs. This method can help offloading the idle mode activities to a single device when there are cluster of more than two (trusted) co-located devices. In this case, only one device may run the idle mode activities instead of all devices do the same tasks.

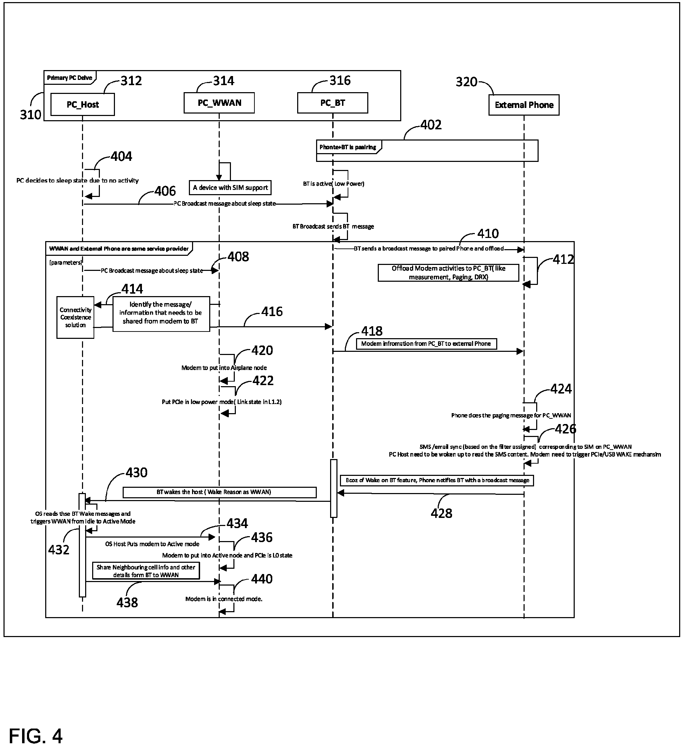

FIG. 4 is a diagram showing an example message sequence for interaction between a primary UE and a secondary UE for offloading the idle mode activities from the primary UE to the secondary UE. This example is for the case that both the primary UE and the secondary UE belong to the same mobile network operator. In this example, a personal computer (PC) device 310 is shown as a primary UE and a mobile phone 320 is shown as a secondary UE. However, the primary UE and the secondary UE may be any user devices. The PC device 310 includes a host (PC_Host) 312, a cellular modem (PC_WWAN) 314, and a BT modem (PC BT) 316. The host 312 is an operating system (OS) running on the PC device 310. The mobile phone 320 also includes a host, a cellular modem, and an BT modem (not shown).

The PC device 310 and the mobile phone 320 are paired over BT (402). The host 312 decides to enter a sleep state due to no activity (404). The host 312 broadcasts a message indicating its intension to enter a sleep state to the cellular modem 314 and the BT modem 316 (406, 408). The BT modem 316 sends a broadcast message to the paired device (i.e., the mobile phone 320) to offload the idle mode activities to the mobile phone 320 (410). The process for offloading the cellular modem idle mode activities from the primary UE to the secondary UE (e.g., idle mode measurements, page monitoring, etc.) is initiated (412).

The cellular modem 314 sends a message/information to the host 312 that needs to be shared for offloading the idle mode activities (414), and the host 312 provides the message/information to the BT modem 316 (416). The BT modem 316 then sends the information (e.g., the DRX cycle of the primary UE and the P-RNTI of the primary UE) to the mobile phone 320 (418). The cellular modem 314 may then enter a low power state (airplane mode) or may be turned off and the PC host-modem interface (e.g., PCIe or USB) may be put in a low power mode (420,422). The mobile phone 320 performs the idle mode activities on behalf of the PC device 310 and detects a paging message or indication for the PC device 310 (424).

When the mobile phone 320 detects the paging indication for the PC device 310 (e.g., detects the P-RNTI of the primary UE) at step 426, the mobile phone 320 (the BT module of the mobile phone 320) notifies the BT modem 316 with a broadcast message (428). The wake-up reason may be included in this message. The BT modem 316 then wakes the host 312 with the reason for paging in a WWAN (430). The host 312 reads the BT wake-up message and triggers WWAN from the idle to the active mode (432). The host 312 puts the cellular modem 314 to an active mode (434). The cellular modem 314 wakes up to the active state and puts the PCIe to L0 state (436). The host 312 sends, if received, neighboring cell information and other information received from the BT modem 316 to the cellular modem 314 (438). The cellular modem 314 may then set up a connection with the base station and transition to a connected mode (440).

It takes long time for a cellular modem to perform frequency scan, cell search, and cell selection. It increases the time for a UE (e.g., a laptop device) to get ready for operation after power on and wake-up from a deep sleep. A laptop device is sometimes switched off or goes to a sleep mode (e.g., S3), where the cellular modem could also be inactive for power saving. When the laptop is powered on again, then during the power on time, the laptop cellular modem triggers the cell search procedure. As a part of the cell search procedure, the cellular modem tunes to different frequency channels and measures the signal power (e.g., a received signal strength indicator (RSSI)). In 4G/5G as the number of frequency bands are increased, the frequency scanning itself takes a lot of time to complete. Based on the measured power level for different frequencies, the cellular modem creates an ordered list. Then based on the ordered list, the cellular modem tunes to the highest order frequency (if that is allowed by the SIM) and performs the cell search operation by searching for primary and secondary synchronization channels/signals. If no primary and secondary synchronization channels/signals are found the cellular modem moves to the next frequency in the list and repeats the same procedure. The cellular modem continues until a suitable cell is found and then it camps on to the suitable cell if the cell selection criteria are matched. The frequency scan, cell search, and cell selection procedure take quite a long time. Therefore, after power on, the user device (e.g., a laptop) may not be connected to the wireless network quickly and it takes a long time to bring the device to ready for operation. Until the device is connected to the mobile network, the connectivity applications (such as email, messaging, cloud sync, etc.) could not start. The same occurs during the wake up from the deep sleep stage when the laptop cellular modem is switch off (not in DRX) to save power.

This problem of prolonged initial network connection during power on and wake-up from a deep sleep mode could be solved by transferring the cell selection/resection-related information (e.g., cell measurement information) obtained by the secondary UE (e.g., a mobile phone) to the cellular modem of the primary UE (e.g., a laptop) during the power on and wake-up procedure of the primary UE or as needed. As the primary UE and the secondary UE are in proximity, the cellular modem of the primary UE can access the cell selection/resection-related information (e.g., cell measurement information) of the secondary UE, for example using Bluetooth LE. This can enable faster network connection after every wake-up and power on of the primary UE.

In examples, the primary UE and the secondary UE may directly communicate via BT LE. A BT LE module is available to both the primary UE and the secondary UE. BT LE is low cost and very low energy consumption module (maximum transmit power is less than 10 mW). Using a BT LE module, the UEs can broadcast data to a nearby device. There is a BT broadcast message included in BT specification that can exchange a payload of 31 bytes of data. Alternatively, the BT modems of the UEs may be paired for better security. As the UEs belong to the same user, the user can initially pair these UEs and authenticate.

Bluetooth security includes authorization, authentication, and optional encryption. These features are based on a secret link key that is shared by a pair of devices. A pairing procedure is used when two devices communicate for the first time to generate this key and use this for any successive communication. These mechanisms are already implemented and part of the primary device system due to the introduction of "Wake on Bluetooth" feature.

The examples disclosed herein can provide a power saving gain due to offloading of idle mode activities from the primary device to the secondary device. Considering the case of two devices, a primary device (laptop) and a secondary device (mobile phone), a primary device cellular modem offloads its idle mode activities to a secondary device and goes for full power down mode. The cellular modem will be switched off or put in an airplane mode but stays connected with the cellular network, as the secondary device's cellular modem looks for any incoming message for the primary device and wakes it up if any incoming message arrives for the primary device. Therefore, in the sleep period, the primary device is also connected to the cellular network via a secondary device.

During the idle mode (DRX mode), the primary device cellular modem consumes about 0.034 mW of power, whereas the secondary device cellular modem consumes about 0.03 mW of power. Therefore, the total power consumption will be about 0.064 mW. However, if the method according to the examples disclosed herein is used (i.e., if the primary device idle mode activities are offloaded to the secondary device), the 0.034 mW of power will be saved. A cellular modem stays in an idle mode for a long time e.g., most of the day (24 hours). So, the total energy saving will be 0.034 mW × H Joule, where H is the time (in sec) duration over which the modem stays in an idle mode. In small form factor devices such as a tablet, the system performance is limited by battery capacity. The power saving effects for the small form factor devices would be comparatively big.

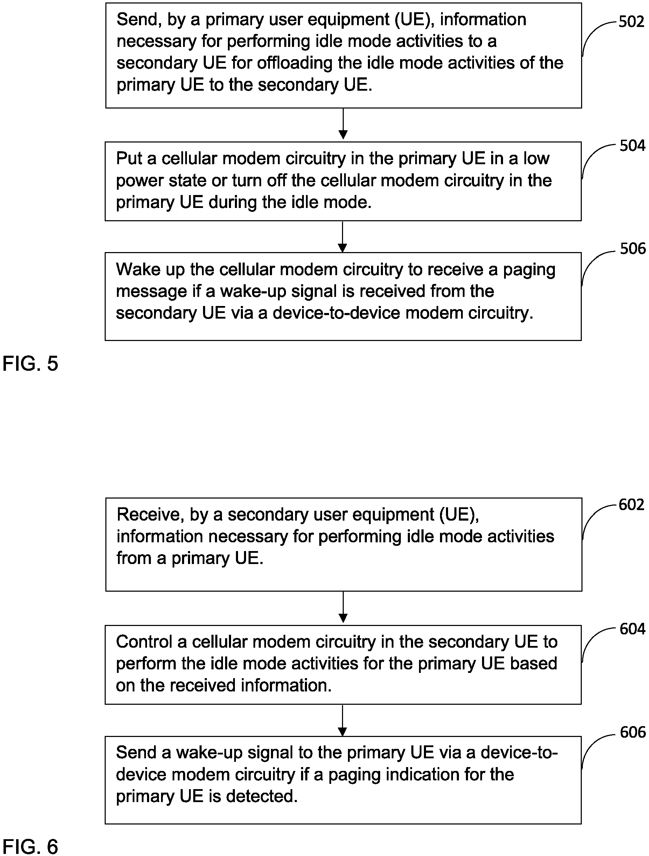

FIG. 5 is a flow diagram of an example process implemented in the primary UE for offloading idle mode activities from the primary UE to the secondary UE. The method includes sending, by a primary UE, information necessary for performing idle mode activities to a secondary UE for offloading the idle mode activities of the primary UE to the secondary UE (502). The method includes putting a cellular modem circuitry in the primary UE in a low power state or turning off the cellular modem circuitry in the primary UE during the idle mode (504). The method includes waking up the cellular modem circuitry to receive a paging message if a wake-up signal is received from the secondary UE via a device-to-device modem circuitry (506).

The information that the primary UE provides to the secondary UE includes a DRX cycle of the primary UE during the idle mode and a P-RNTI of the primary UE. The information may further include a cell ID of a cell that the primary UE camps on, a frequency that the primary UE monitors during the idle mode, and/or the RAT of the primary UE.

The method may further include receiving cell selection/reselection information from the secondary UE along with the wake-up signal and performing cell selection/reselection based on the received cell selection/reselection information.

FIG. 6 is a flow diagram of an example process implemented in the secondary UE for offloading idle mode activities from the primary UE to the secondary UE. The method includes receiving, by a secondary UE, information necessary for performing idle mode activities from a primary UE (602). The method includes controlling a cellular modem circuitry in the secondary UE to perform the idle mode activities for the primary UE based on the received information (604). The method includes sending a wake-up signal to the primary UE via a device-to-device modem circuitry if a paging indication for the primary UE is detected (606).

The information that the secondary UE receives from the primary UE includes a DRX period of the primary UE during the idle mode and a P-RNTI of the primary UE. The information may further include a cell ID of a cell that the primary UE camps on, a frequency that the primary UE monitors during the idle mode, and/or the RAT of the primary UE. The cell selection/reselection information obtained by the secondary UE during the idle mode may be sent to the primary UE along with the wake-up signal.

With the example schemes disclosed herein, a longer battery life can be achieved even with a high end integrated cellular modem in a UE such as a laptop computer, a tablet, etc. This helps to achieve higher WWAN attach rates in laptops or tablets which have low power requirements towards the connectivity devices. In addition, an improved response time, reduced latency and better user experience can be achieved when the cellular modem wakes up from a sleep state (e.g., one of different levels of sleep states) to an active state. Less time is needed to do measuring neighbor cells and cell reselection during the transition from the sleep state to the active state, which also helps in reducing the power consumption by the cellular modem in an idle mode. The battery life of the system can be improved without impacting user experiences. The usage of available connectivity resources in the system can be improved. The example schemes can also reduce power wastage by running similar mode operations in a single device. The solutions disclosed herein are OS agnostic and the advantages can be achieved on all OS segments.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

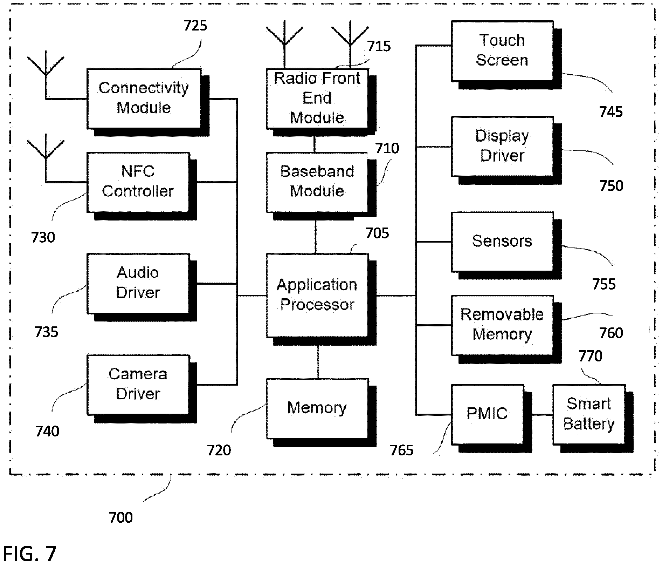

FIG. 7 illustrates a user device 700 in which the examples disclosed herein may be implemented. For example, the examples disclosed herein may be implemented in the radio front-end module 715, in the baseband module 710, etc. The user device 700 may be a mobile device in some aspects and includes an application processor 705, baseband processor 710 (also referred to as a baseband module), radio front end module (RFEM) 715, memory 720, connectivity module 725, near field communication (NFC) controller 730, audio driver 735, camera driver 740, touch screen 745, display driver 750, sensors 755, removable memory 760, power management integrated circuit (PMIC) 765 and smart battery 770.

In some aspects, application processor 705 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 710 may be implemented, for example, as a solder-down substrate including one or more integrated circuits, a single packaged integrated circuit soldered to a main circuit board, and/or a multi-chip module containing two or more integrated circuits.

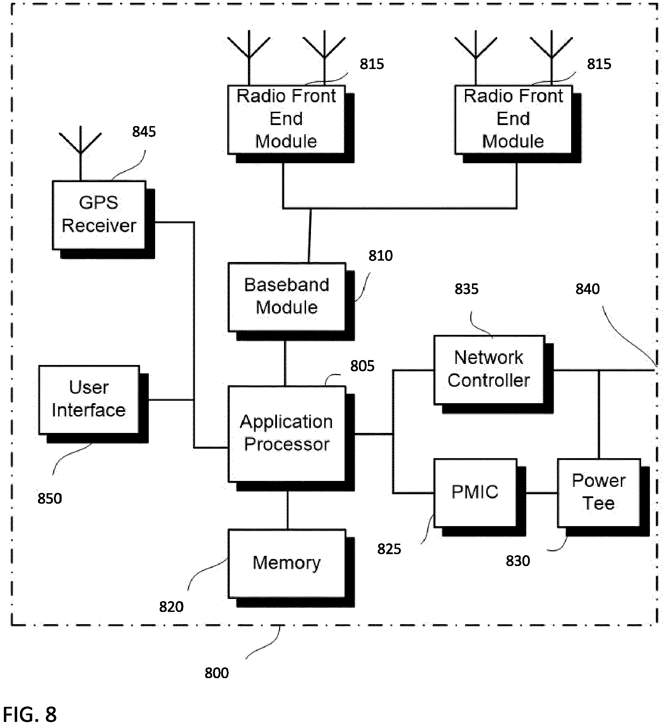

FIG. 8 illustrates a base station or infrastructure equipment radio head 800 in which the examples disclosed herein may be implemented. For example, the examples disclosed herein may be implemented in the radio front-end module 815, in the baseband module 810, etc. The base station radio head 800 may include one or more of application processor 805, baseband modules 810, one or more radio front end modules 815, memory 820, power management circuitry 825, power tee circuitry 830, network controller 835, network interface connector 840, satellite navigation receiver module 845, and user interface 850.

In some aspects, application processor 805 may include one or more CPU cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 810 may be implemented, for example, as a solder-down substrate including one or more integrated circuits, a single packaged integrated circuit soldered to a main circuit board or a multi-chip module containing two or more integrated circuits.

In some aspects, memory 820 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto resistive random access memory (MRAM) and/or a three-dimensional crosspoint memory. Memory 820 may be implemented as one or more of solder down packaged integrated circuits, socketed memory modules and plug-in memory cards.

In some aspects, power management integrated circuitry 825 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 830 may provide for electrical power drawn from a network cable to provide both power supply and data connectivity to the base station radio head 800 using a single cable.

In some aspects, network controller 835 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 845 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 845 may provide data to application processor 805 which may include one or more of position data or time data. Application processor 805 may use time data to synchronize operations with other radio base stations.

In some aspects, user interface 850 may include one or more of physical or virtual buttons, such as a reset button, one or more indicators such as light emitting diodes (LEDs) and a display screen.

The examples as described herein may be summarized as follows:

An example (e.g., example 1) relates to a UE. The UE includes a cellular modem circuitry for wireless communication with a base station of a cellular wireless wide area network, wherein the cellular modem circuitry is configured to perform idle mode activities during an idle mode, a device-to-device modem circuitry for direct wireless communication with a secondary UE, and a processor configured to control the cellular modem circuitry and the device-to-device modem circuitry. The processor is configured to send information necessary for performing the idle mode activities to the secondary UE for offloading the idle mode activities to the secondary UE and put the cellular modem circuitry in a low power state or turn off the cellular modem circuitry during the idle mode. The processor is configured to wake up the cellular modem circuitry to receive a paging message if a wake-up signal is received from the secondary UE.

Another example (e.g., example 2) relates to a previously described example (e.g., example 1), wherein the information includes a discontinuous reception (DRX) cycle of the UE during the idle mode and a paging radio network temporary identifier (P-RNTI) of the UE.

Another example (e.g., example 3) relates to a previously described example (e.g., example 2), wherein the information further includes a cell ID of a cell that the UE camps on, a frequency that the UE monitors during the idle mode, and RAT of the primary UE.

Another example (e.g., example 4) relates to a previously described example (e.g., one of examples 1-3, wherein the wake-up signal includes a reason for wake-up.

Another example (e.g., example 5) relates to a previously described example (e.g., any one of examples 1-4), wherein the processor is configured to receive cell selection-related information from the secondary UE along with the wake-up signal and the cellular modem circuitry is configured to perform cell selection based on the received cell selection-related information.

Another example (e.g., example 6) relates to a previously described example (e.g., any one of examples 1-5), wherein the device-to-device modem circuitry is a Bluetooth modem.

Another example (e.g., example 7) relates to a previously described example (e.g., example 6), wherein the Bluetooth modem remains active during the idle mode and is configured to wake up the processor in response to the wake-up signal.

Another example (e.g., example 8) relates to a UE. The UE includes a cellular modem circuitry for wireless communication with a base station of a cellular wireless wide area network, wherein the cellular modem circuitry is configured to perform idle mode activities during an idle mode, a device-to-device modem circuitry for direct wireless communication with a primary UE, and a processor configured to control the cellular modem circuitry and the device-to-device modem circuitry. The processor is configured to receive information necessary for performing idle mode activities from the primary UE, control the cellular modem circuitry to perform the idle mode activities for the primary UE based on the received information, and send a wake-up signal to the primary UE using the device-to-device modem circuitry if a paging indication for the primary UE is detected.

Another example (e.g., example 9) relates to a previously described example (e.g., example 8), wherein the information includes a DRX period of the primary UE during the idle mode and a P-RNTI of the primary UE.

Another example (e.g., example 10) relates to a previously described example (e.g., example 9), wherein the information further includes a cell ID of a cell that the primary UE camps on, a frequency that the primary UE monitors during the idle mode, and RAT of the primary UE.

Another example (e.g., example 11) relates to a previously described example (e.g., any one of examples 8-10), wherein the processor is configured to include a reason for wake-up in the wake-up signal.

Another example (e.g., example 12) relates to a previously described example (e.g., any one of examples 8-11), wherein the processor is configured to send cell selection-related information that the UE obtained during the idle mode to the primary UE along with the wake-up signal.

Another example (e.g., example 13) relates to a previously described example (e.g., any one of examples 8-12), wherein the device-to-device modem circuitry is a Bluetooth modem.

Another example (e.g., example 14) relates to a method for offloading idle mode activities. The method includes sending, by a primary UE, information necessary for performing idle mode activities to a secondary UE for offloading the idle mode activities of the primary UE to the secondary UE, putting a cellular modem circuitry in the primary UE in a low power state or turning off the cellular modem circuitry in the primary UE during the idle mode, and waking up the cellular modem circuitry to receive a paging message if a wake-up signal is received from the secondary UE via a device-to-device modem circuitry.

Another example (e.g., example 15) relates to a previously described example (e.g., example 14), wherein the information includes a DRX cycle of the primary UE during the idle mode and a P-RNTI of the primary UE.

Another example (e.g., example 16) relates to a previously described example (e.g., example 15), wherein the information further includes a cell ID of a cell that the primary UE camps on, a frequency that the primary UE monitors during the idle mode, and RAT of the primary UE.

Another example (e.g., example 17) relates to a previously described example (e.g., any one of examples 14-16), further comprising receiving cell selection-related information from the secondary UE along with the wake-up signal and performing cell selection/reselection based on the received cell selection-related information.

Another example (e.g., example 18) relates to a previously described example (e.g., any one of examples 14-17), wherein the device-to-device modem circuitry is a Bluetooth modem.

Another example (e.g., example 19) relates to a previously described example (e.g., example 18), wherein the Bluetooth modem remains active during the idle mode and is configured to wake up a host of the primary UE in response to the wake-up signal.

Another example (e.g., example 20) relates to a method for offloading idle mode activities. The method includes receiving, by a secondary UE, information necessary for performing idle mode activities from a primary UE, controlling a cellular modem circuitry in the secondary UE to perform the idle mode activities for the primary UE based on the received information, and sending a wake-up signal to the primary UE via a device-to-device modem circuitry if a paging indication for the primary UE is detected.

Another example (e.g., example 21) relates to a previously described example (e.g., example 20), wherein the information includes a DRX cycle of the primary UE during the idle mode and a P-RNTI of the primary UE.

Another example (e.g., example 22) relates to a previously described example (e.g., example 21), wherein the information further includes a cell ID of a cell that the primary UE camps on, a frequency that the primary UE monitors during the idle mode, and RAT of the primary UE.

Another example (e.g., example 23) relates to a previously described example (e.g., any one of examples 20-22), wherein cell selection-related information obtained by the secondary UE during the idle mode is sent to the primary UE along with the wake-up signal.

Another example (e.g., example 24) relates to a previously described example (e.g., any one of examples 21-23), wherein the device-to-device modem circuitry is a Bluetooth modem.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A user equipment, UE, (210), comprising:

   a cellular modem circuitry (214) for wireless communication with a base station of a cellular wireless wide area network, wherein the cellular modem circuitry (214) is configured to perform idle mode activities during an idle mode;
   a device-to-device modem circuitry (216) for direct wireless communication with a secondary UE (220);
   a processor (212) configured to control the cellular modem circuitry (214) and the device-to-device modem circuitry (216),
   wherein the processor (212) is configured to send information necessary for performing the idle mode activities to the secondary UE (220) for offloading the idle mode activities to the secondary UE (220), and put the cellular modem circuitry (214) in a low power state or turn off the cellular modem circuitry (214) during the idle mode,
   wherein the processor (212) is configured to wake up the cellular modem circuitry (214) to receive a paging message if a wake-up signal is received from the secondary UE (220).

2. The UE (210) of claim 1, wherein the information includes a discontinuous reception, DRX, cycle of the UE (210) during the idle mode and a paging radio network temporary identifier, P-RNTI, of the UE (210).

3. The UE (210) of claim 2, wherein the information further includes a cell identity, ID, of a cell that the UE (210) camps on, a frequency that the UE (210) monitors during the idle mode, and radio network technology, RAT, of the UE (210).

4. The UE (210) as in any one of claims 1-3, wherein the wake-up signal includes a reason for wake-up.

5. The UE (210) as in any one of claims 1-4, wherein the processor (212) is configured to receive cell selection-related information from the secondary UE (220) along with the wake-up signal and the cellular modem circuitry (214) is configured to perform cell selection based on the received cell selection-related information.

6. The UE (210) as in any one of claims 1-5, wherein the device-to-device modem circuitry is a Bluetooth modem, and the Bluetooth modem remains active during the idle mode and is configured to wake up the processor (212) in response to the wake-up signal.

7. A user equipment, UE, (220), comprising:

   a cellular modem circuitry (224) for wireless communication with a base station of a cellular wireless wide area network, wherein the cellular modem circuitry (224) is configured to perform idle mode activities during an idle mode;

**EP 4 181 580 A1**

a device-to-device modem circuitry (226) for direct wireless communication with a primary UE (210);
a processor (222) configured to control the cellular modem circuitry (224) and the device-to-device modem circuitry (226),
wherein the processor (222) is configured to receive information necessary for performing idle mode activities from the primary UE (210), control the cellular modem circuitry (224) to perform the idle mode activities for the primary UE (210) based on the received information, and send a wake-up signal to the primary UE (210) using the device-to-device modem circuitry (226) if a paging indication for the primary UE (210) is detected.

8. The UE (220) of claim 7, wherein the information includes a discontinuous reception, DRX, period of the primary UE during the idle mode and a paging radio network temporary identifier, P-RNTI, of the primary UE.

9. The UE (220) of claim 8, wherein the information further includes a cell identity, ID, of a cell that the primary UE (210) camps on, a frequency that the primary UE (210) monitors during the idle mode, and radio network technology, RAT, of the primary UE (210).

10. The UE (220) as in any one of claims 7-9, wherein the processor (222) is configured to include a reason for wake-up in the wake-up signal.

11. The UE (220) as in any one of claims 7-10, wherein the processor (222) is configured to send cell selection-related information that the UE (220) obtained during the idle mode to the primary UE (210) along with the wake-up signal.

12. The UE as in any one of claims 7-11, wherein the device-to-device modem circuitry is a Bluetooth modem.

13. A method for offloading idle mode activities, comprising:

sending, by a primary user equipment, UE, (210), information necessary for performing idle mode activities to a secondary UE (220) for offloading the idle mode activities of the primary UE (210) to the secondary UE (220);
putting a cellular modem circuitry (214) in the primary UE (210) in a low power state or turning off the cellular modem circuitry (214) in the primary UE (210) during the idle mode; and
waking up the cellular modem circuitry (214) to receive a paging message if a wake-up signal is received from the secondary UE (220) via a device-to-device modem circuitry (216).

14. The method of claim 13, wherein the information includes a discontinuous reception, DRX, cycle of the primary UE (210) during the idle mode and a paging radio network temporary identifier, P-RNTI, of the primary UE (210).

15. A method for offloading idle mode activities, comprising:

receiving, by a secondary user equipment, UE, (220), information necessary for performing idle mode activities from a primary UE (210);
controlling a cellular modem circuitry (224) in the secondary UE (220) to perform the idle mode activities for the primary UE (210) based on the received information; and
sending a wake-up signal to the primary UE (210) via a device-to-device modem circuitry (226) if a paging indication for the primary UE (210) is detected.

FIG. 1

FIG. 2

210

Primary UE

Processor

212

Cellular modem
circuitry

214

D2D modem
circuitry

216

220

Secondary UE

Processor

222

Cellular modem
circuitry

224

D2D modem
circuitry

226

FIG. 3

EP 4 181 580 A1

FIG. 4

16

Send, by a primary user equipment (UE), information necessary for performing idle mode activities to a secondary UE for offloading the idle mode activities of the primary UE to the secondary UE. ⌐502

Put a cellular modem circuitry in the primary UE in a low power state or turn off the cellular modem circuitry in the primary UE during the idle mode. ⌐504

Wake up the cellular modem circuitry to receive a paging message if a wake-up signal is received from the secondary UE via a device-to-device modem circuitry. ⌐506

FIG. 5

Receive, by a secondary user equipment (UE), information necessary for performing idle mode activities from a primary UE. ⌐602

Control a cellular modem circuitry in the secondary UE to perform the idle mode activities for the primary UE based on the received information. ⌐604

Send a wake-up signal to the primary UE via a device-to-device modem circuitry if a paging indication for the primary UE is detected. ⌐606

FIG. 6

FIG. 7

FIG. 8

Europäisches
Patentamt

European
Patent Office

Office européen
des brevets

# EUROPEAN SEARCH REPORT

Application Number

EP 21 20 7526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 499 979 A1 (NOKIA TECHNOLOGIES OY [FI]) 19 June 2019 (2019-06-19) | 1-3,5-8, 11-15 | INV. H04W52/02 |
| Y | * abstract *<br>* paragraph [0006] - paragraph [0075] *<br>* figures 1-11 * | 4,10 | |
| X | EP 3 219 155 A1 (ERICSSON TELEFON AB L M (PUBL) [SE]) 20 September 2017 (2017-09-20) | 1-3,5-9, 11-15 | |
| Y | * paragraph [0028] - paragraph [0070] *<br>* figures 1-6 * | 4,10 | |
| X | US 2012/069827 A1 (LEE JANGWON [US] ET AL) 22 March 2012 (2012-03-22) | 1-3,5-9, 11-15 | |
| Y | * abstract *<br>* paragraph [0027] - paragraph [0071] *<br>* figures 1-7 * | 4,10 | |
| A | EP 3 639 572 A1 (SONY CORP [JP]) 22 April 2020 (2020-04-22)<br>* paragraph [0010] - paragraph [0174] *<br>* figures 1-20 * | 1-15 | TECHNICAL FIELDS SEARCHED (IPC) |
| Y | US 2019/349857 A1 (KIM JEONGKI [KR] ET AL) 14 November 2019 (2019-11-14) | 4,10 | H04W |
| A | * paragraph [0231] - paragraph [0237] * | 1-3,5-9, 11-15 | |

The present search report has been drawn up for all claims

| Place of search | Date of completion of the search | Examiner |
|---|---|---|
| The Hague | 11 April 2022 | Tzimeas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 7526

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2022

| Patent document cited in search report | | Publication date | Patent family member(s) | | Publication date |
|---|---|---|---|---|---|
| EP 3499979 | A1 | 19-06-2019 | EP | 3499979 A1 | 19-06-2019 |
| | | | US | 2019191371 A1 | 20-06-2019 |
| EP 3219155 | A1 | 20-09-2017 | CN | 107113727 A | 29-08-2017 |
| | | | EP | 3219155 A1 | 20-09-2017 |
| | | | JP | 6412644 B2 | 24-10-2018 |
| | | | JP | 2018503992 A | 08-02-2018 |
| | | | US | 2016142974 A1 | 19-05-2016 |
| | | | WO | 2016074899 A1 | 19-05-2016 |
| US 2012069827 | A1 | 22-03-2012 | CN | 103125135 A | 29-05-2013 |
| | | | EP | 2617242 A1 | 24-07-2013 |
| | | | JP | 5453576 B2 | 26-03-2014 |
| | | | JP | 2013541284 A | 07-11-2013 |
| | | | KR | 20130069804 A | 26-06-2013 |
| | | | US | 2012069827 A1 | 22-03-2012 |
| | | | WO | 2012037332 A1 | 22-03-2012 |
| EP 3639572 | A1 | 22-04-2020 | CN | 110915267 A | 24-03-2020 |
| | | | EP | 3639572 A1 | 22-04-2020 |
| | | | US | 2020163017 A1 | 21-05-2020 |
| | | | WO | 2018206124 A1 | 15-11-2018 |
| US 2019349857 | A1 | 14-11-2019 | US | 2019349857 A1 | 14-11-2019 |
| | | | WO | 2018097679 A1 | 31-05-2018 |

EPO FORM P0459

For more details about this annex : see Official Journal of the European Patent Office, No. 12/82